# EUROPEAN PATENT SPECIFICATION

(11) **EP 3 306 432 B1**
(45) Date of publication and mention of the grant of the patent: **23.02.2022**
(21) Application number: 16799373.2
(22) Date of filing: 27.05.2016
(51) Int. Cl.: G05D 1/10, B64C 39/02, G05D 1/00

(54) **FLIGHT CONTROL METHOD FOR AN AIRCRAFT, CONTROL DEVICE AND COMPUTER PROGRAM TO IMPLEMENT THE FLIGHT CONTROL METHOD**
STEUERUNGSVERFAHREN FÜR EIN FLUGZEUG, ELEKTRONISCHE VORRICHTUNG SOWIE STEUERUNGSPROGRAM
DISPOSITIF DE COMMANDE D'UN AÉRONEF, PROCÉDÉ DE COMMANDE ET PROGRAMME D'ORDINATEUR ASSOCIÉS

(30) Priority: 28.05.2015 CN 201510284823
(43) Date of publication of application: 11.04.2018
(73) Proprietor: Xiaomi Inc., Beijing 100085 (CN)
(72) Inventor: ZHANG, Pengfei, Beijing 100085 (CN); CAI, Wei, Beijing 100085 (CN); XIA, Yongfeng, Beijing 100085 (CN); YE, Hualin, Beijing 100085 (CN)
(74) Representative: Hughes, Andrea Michelle
(86) International application number: PCT/CN2016/083729
(87) International publication number: WO 2016/188486

(56) References cited:
- EP-A1- 2 511 781
- EP-A2- 2 818 958
- WO-A1-2013/163746
- CN-A- 1 934 562
- CN-A- 101 046 387
- CN-A- 101 206 260
- CN-A- 102 393 641
- CN-A- 104 898 699

## Description

### TECHNICAL FIELD

The embodiments of the present disclosure generally relate to the technical field of aircraft control, and more particularly, to a flight control method and apparatus, and an electronic device.

### BACKGROUND

Aircraft can be used in many fields, such as aerial photography, transportation of articles and the like, and have the characteristics of low cost, small size, high flexibility and the like. By means of wireless communications between an aircraft and a remote control device, a user can control the flight of the aircraft so as to reach a desired flight target. European patent application publication EP 2 818 958 A2 discloses a flying vehicle guiding system including a remotely controllable flying vehicle system, a surveying instrument able to measure distance, angle and track, and a ground base station for controlling flight of the flying vehicle system based on measuring results by the surveying instrument.

European patent application publication EP 2 511 781 A1 discloses a method and system for controlling an unmanned aircraft. The system has an evaluation unit determining an actual state of an automotive unmanned controllable aerial vehicle in a coordinate system, where the actual state is utilized for determining a position, an orientation and/or a position change of the vehicle. A control unit controls the aerial vehicle and produces control data using an algorithm depending on the determined actual state and a defined reference state. The control unit automatically changes the aerial vehicle in the reference state in a defined tolerance range in a controlled manner using the control data.

### SUMMARY

The present disclosure provides a flight control method and apparatus and an electronic device, in accordance with claims which follow.

According to a first aspect of the embodiments of the present disclosure, there is provided a flight control method as defined by claim 1. The method comprises determining a relative position relationship between an aircraft and a control device, the control device being a single device configured to control the aircraft; determining a polar coordinate system with the control device as an origin according to the relative position relationship; receiving a flight direction control instruction sent by the control device, the flight direction control instruction being generated on the basis of the polar coordinate system.

The method further comprises controlling, according to coordinate information about the aircraft in the polar coordinate system, the aircraft to fly in accordance with the flight direction control instruction. Controlling the aircraft to fly in accordance with the flight direction control instruction comprises, when the flight direction control instruction refers to forward flight or backward flight, controlling the aircraft to fly along a direction of a connecting line between the aircraft and the control device so that a length value in the coordinate information varies and an angle value does not vary; or when the flight direction control instruction refers to left turn or right turn, controlling the aircraft to fly along a direction perpendicular to a connecting line between the aircraft and the control device so that an angle value in the coordinate information varies and a length value does not vary.

The method further includes that determining the relative position relationship between the aircraft and the control device comprises: sensing a sensing signal transmitted by a signal transceiver device at the control device respectively via a plurality of signal sensing devices installed at different positions on the aircraft; comparing signal strengths sensed respectively by the signal sensing devices, wherein projections, of a signal sensing device corresponding to a highest signal strength, a signal sensing device corresponding to a lowest signal strength and the control device, to a vertical direction are located on a same straight line, and the signal sensing device corresponding to the highest signal strength and the control device are adjacent nodes on the straight line; and determining the relative position relationship according to installation positions of the signal sensing devices on the aircraft; or sending detection signals to a signal transceiver device at the control device simultaneously via a plurality of signal transmitting devices installed at different positions on the aircraft; determining a detection signal first received by the signal transceiver device and a detection signal last received by the signal transceiver device according to a received response message returned by the signal transceiver device, projections, of signal transmitting devices corresponding to the detection signals and the control device, to a vertical direction being located on a same straight line, and a signal transmitting device corresponding to the first received detection signal and the control device being adjacent nodes on the straight line; and determining the relative position relationship according to installation positions of the signal transmitting devices on the aircraft.

According to a second aspect of the embodiments of the present disclosure, there is provided a flight control apparatus as defined in claim 6, including: a relationship determination unit configured to determine a relative position relationship between an aircraft and a control device, the control device being a single device configured to control the aircraft; a coordinate system determination unit configured to determine a polar coordinate system with the control device as an origin according to the relative position relationship; a receiving unit configured to receive a flight direction control instruction sent by the control device, the flight direction control instruction being generated on the basis of the polar coordinate system; and a drive unit configured to control, according to coordinate information about the aircraft in the polar coordinate system, the aircraft to fly in accordance with the flight direction control instruction. The advantages and technical effects of the apparatus according to the invention correspond to those of the method presented above.

The drive unit may include: a first drive sub-unit configured to, when the flight direction control instruction refers to forward flight or backward flight, control the aircraft to fly along a direction of a connecting line between the aircraft and the control device so that a length value in the coordinate information varies and an angle value does not vary.

The drive unit may include: a second drive sub-unit configured to, when the flight direction control instruction refers to left turn or right turn, drive the aircraft to fly along a direction perpendicular to a connecting line between the aircraft and the control device so that an angle value in the coordinate information varies and a length value does not vary.

The relationship determination unit may include: a sensing sub-unit configured to sense a sensing signal transmitted by a signal transceiver device at the control device respectively via a plurality of signal sensing devices installed at different positions on the aircraft; a comparison sub-unit configured to compare signal strengths sensed respectively by the signal sensing devices, wherein projection, of a signal sensing device corresponding to a highest signal strength, a signal sensing device corresponding to a lowest signal strength and the control device, to a vertical direction, are located on a same straight line, and the signal sensing device corresponding to the highest signal strength and the control device are adjacent nodes on the straight line; and a first relationship determination sub-unit configured to determine the relative position relationship according to installation positions of the signal sensing devices on the aircraft.

Alternatively, the relationship determination unit may include: a sending sub-unit configured to send detection signals to a signal transceiver device at the control device simultaneously via a plurality of signal transmitting devices installed at different positions on the aircraft; a device determination sub-unit configured to determine a detection signal first received by the signal transceiver device and a detection signal last received by the signal transceiver device according to a received response message returned by the signal transceiver device, projections of signal transmitting devices corresponding to the detection signals and the control device, to a vertical direction, being located on a same straight line, and a signal transmitting device corresponding to the first received detection signal and the control device being adjacent nodes on the straight line; and a second relationship determination sub-unit configured to determine the relative position relationship according to installation positions of the signal transmitting devices on the aircraft.

According to a particular embodiment, the relationship determination unit may include: a reading sub-unit configured to read first positioning information about the aircraft via a first positioning device installed on the aircraft; a receiving sub-unit configured to receive second positioning information sent by a signal transceiver device at the control device, the second positioning information being generated by a second positioning device at the control device; and a third relationship determination sub-unit configured to determine the relative position relationship according to the first positioning information and the second positioning information.

According to a particular embodiment, the apparatus may further include: a reading unit configured to read a type identifier contained in the flight direction control instruction; and a determination unit configured to determine the type of the flight direction control instruction according to the type identifier, wherein when the type identifier has a first value, it is indicated that the flight direction control instruction is generated on the basis of the polar coordinate system; and when the type identifier has a second value, it is indicated that the flight direction control instruction is generated on the basis of a flight coordinate system of the aircraft, then the drive unit directly executes the flight direction control instruction so as to drive the aircraft.

According to a particular embodiment, the drive unit may include: a transformation sub-unit configured to transform a target direction corresponding to the flight direction control instruction from the polar coordinate system to a flight coordinate system of the aircraft; and a fourth drive sub-unit configured to drive the aircraft in accordance with the transformed target direction.

According to a third aspect of the embodiments of the present disclosure, there is provided a computer program for executing steps of a flight control method as defined in claim 11.

It will be appreciated that the above general descriptions and the following detailed descriptions are merely exemplary and explanatory, and cannot limit the present disclosure.

### BRIEF DESCRIPTION OF THE DRAWINGS

The accompanying drawings, which are incorporated in and constitute a part of this description, illustrate embodiments consistent with the present disclosure and, together with the description, serve to explain the principles of the embodiments of the present disclosure.
Fig. 1 is a schematic diagram illustrating a flight control scenario according to an exemplary embodiment.
Fig. 2 is a flow chart showing a flight control method according to an exemplary embodiment.
Fig. 3 is a schematic diagram illustrating a coordinate relationship for flight control according to an exemplary embodiment.
Fig. 4 is another flow chart showing a flight control method according to an exemplary embodiment.
Fig. 5 is a schematic diagram illustrating determination of a relative position relationship according to an exemplary embodiment.

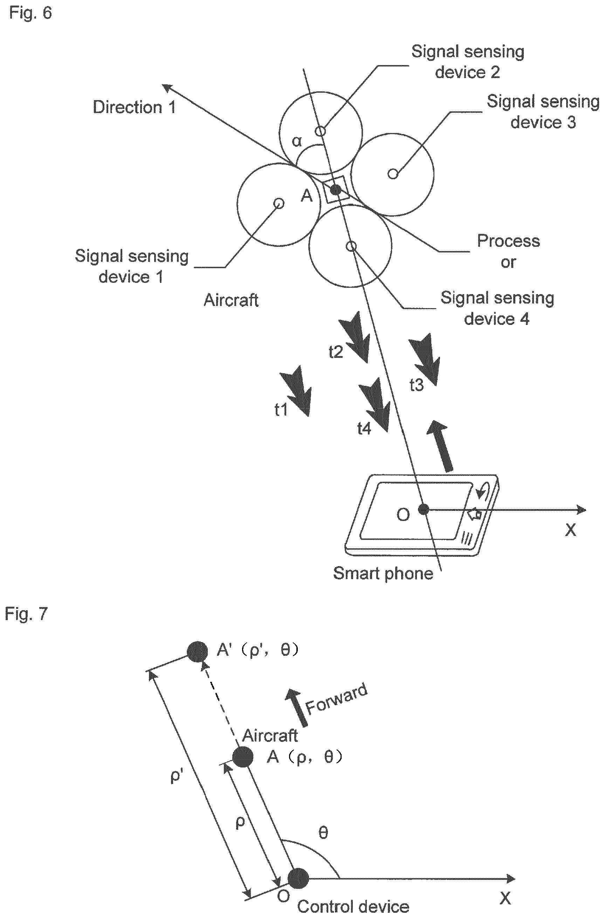

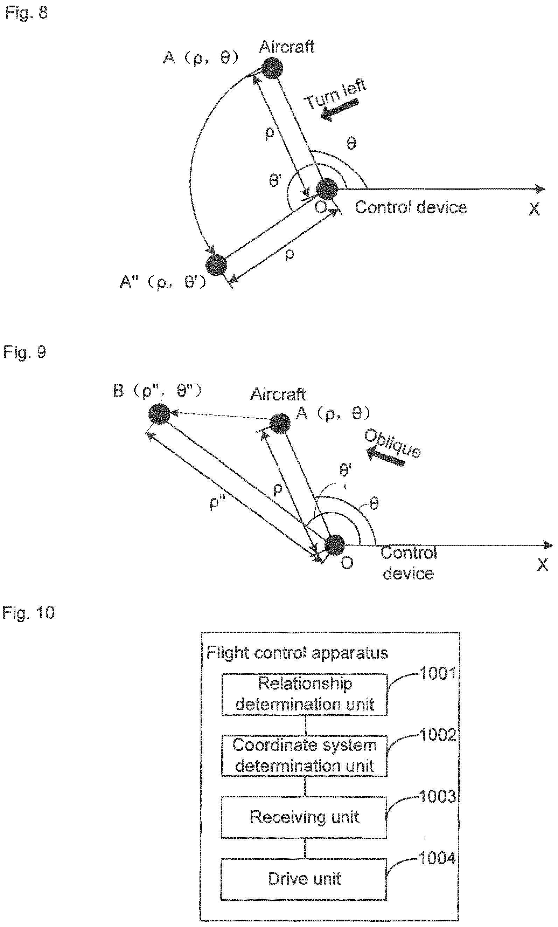

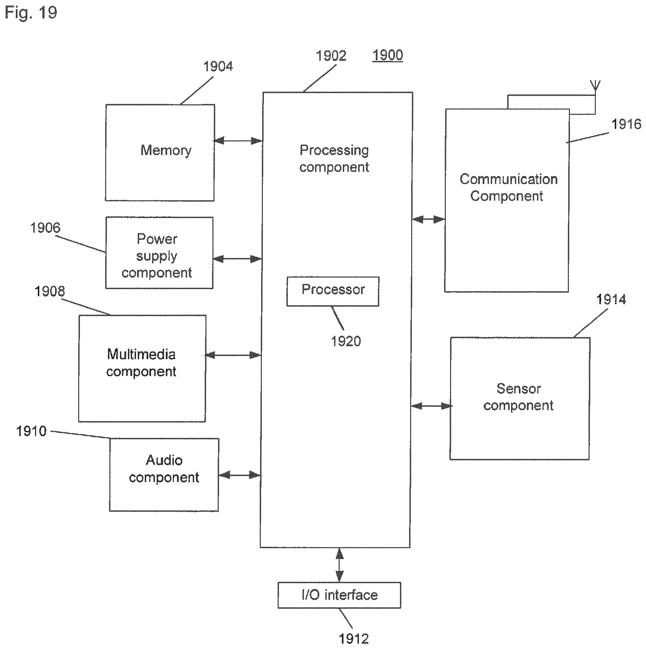

Fig. 6 is another schematic diagram illustrating determination of a relative position relationship according to an exemplary embodiment.Fig. 7 is a schematic diagram illustrating flight control according to an exemplary embodiment.Fig. 8 is another schematic diagram illustrating flight control according to an exemplary embodiment.Fig. 9 is another schematic diagram illustrating flight control according to an exemplary embodiment.Fig. 10-18 are block diagrams of a flight control apparatus according to an exemplary embodiment.Fig. 19 is a structural schematic diagram illustrating an apparatus for flight control according to an exemplary embodiment.

### DETAILED DESCRIPTION

Reference will now be made in detail to exemplary embodiments, examples of which are illustrated in the accompanying drawings. The following description refers to the accompanying drawings in which the same numbers in

different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

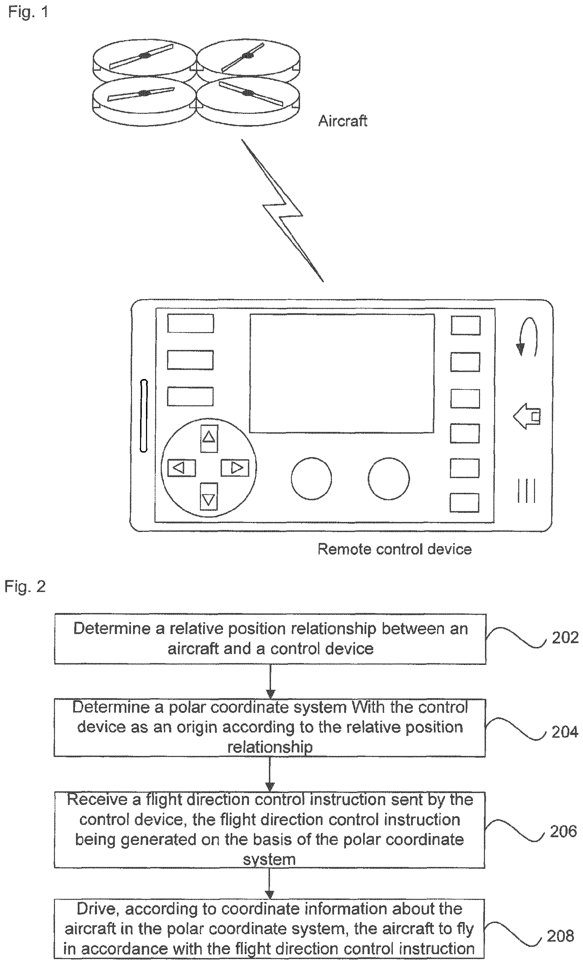

Fig. 1 is a schematic diagram illustrating a flight control scenario according to an exemplary embodiment. As shown in Fig. 1, signal transmission is implemented in a wireless manner between a remote control device and an aircraft. After a user sends a control instruction to the aircraft via the remote control device, the aircraft can be controlled to fly.

Conventionally, when the user sends a control instruction, particularly a flight direction control instruction, to the aircraft via the remote control device, flight control is required to be implemented from a perspective of the aircraft. For instance, when the flight direction control instruction refers to leftward flight, it shall be interpreted that the aircraft turns to the left side of the aircraft itself. However, when the aircraft flies far away and it is difficult to observe the orientation of the aircraft or when the aircraft is of a four-axis structure shown in Fig. 1, the user often cannot distinguish real-time attitudes of the aircraft, thereby making it difficult to implement control from a perspective of the aircraft.

Consequently, the embodiments of the present disclosure, by improving the flight control over the aircraft, solve the above technical problems existing in the relevant art.

Fig. 2 is a flow chart showing a flight control method according to an exemplary embodiment.

As shown in Fig. 1, the method is applied to an aircraft, and may include the steps as follows. In Step 202, a relative position relationship between an aircraft and a control device is determined.

In the present embodiment, as an exemplary implementation, the aircraft may acquire the relative position relationship in accordance with a preset period; or as another exemplary implementation, the aircraft may acquire the relative position relationship whenever receiving a flight direction control instruction.

In Step 204, a polar coordinate system with the control device as an origin is determined according to the relative position relationship.

In Step 206, a flight direction control instruction sent by the control device is received, the flight direction control instruction being generated on the basis of the polar coordinate system.

In the present embodiment, the control device sends data such as the flight direction control instruction and other types of instructions or information to the aircraft via a signal transceiver device, and the signal transceiver device may be built in a remote control device. Data transmission may be implemented between the aircraft and the remote control device in any wireless manner such as Wi-Fi or Bluetooth, and there are no limits specifically made in the embodiment of the disclosure.

In the present embodiment, because the flight direction control instruction is generated on the basis of the polar coordinate system and the origin of the polar coordinate system is located at the control device, flight control for the aircraft is implemented, actually, by taking the control device as a center without needing to consider a real-time attitude (such as orientation) of the aircraft, and the aircraft may be self-adjusted according to a target direction corresponding to the flight direction control instruction.

In Step 208, according to coordinate information about the aircraft in the polar coordinate system, the aircraft is driven to fly in accordance with the flight direction control instruction.

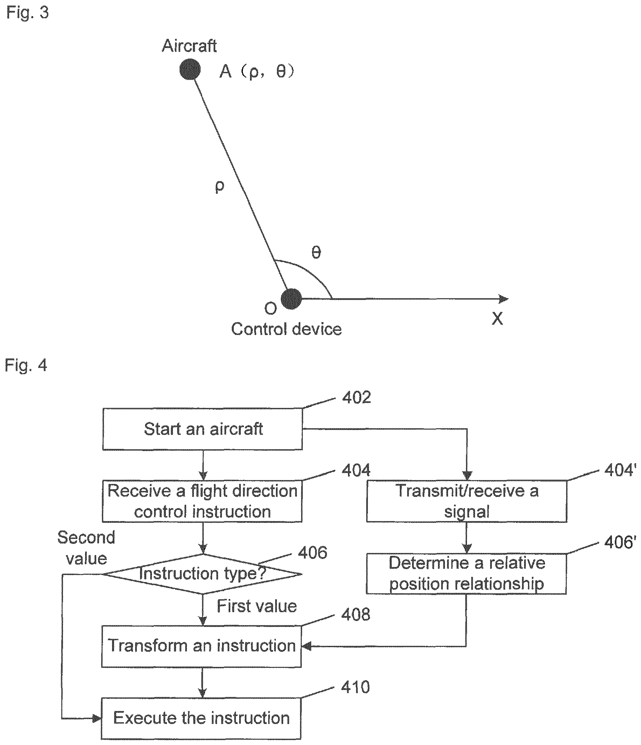

As shown in Fig. 3, it is assumed that the control device is located at a point O, and a polar coordinate system OX with the point O as an origin is established. The aircraft may get coordinate information about the aircraft itself in the polar coordinate system OX according to the relative position relationship between the aircraft itself and the control device. It is assumed that the aircraft is located at a point A and coordinate information is (ρ, θ), then the control device need not consider, for flight control of the aircraft, factors such as the real-time attitude of the aircraft, and may send a flight direction control instruction in a self-centered manner instead, and the aircraft only needs to transform the flight direction control instruction into adjustment of the coordinate information about the aircraft itself. For instance, as an exemplary implementation, the aircraft may complete flying by transforming a target direction corresponding to the flight direction control instruction from the polar coordinate system to a flight coordinate system of the aircraft itself and then executing the transformed target direction.

In the present embodiment, the flight direction control instruction is configured to control a flight direction of the aircraft, including a forward direction, a backward direction, a leftward direction and a rightward direction in a plane, and excluding an upward direction and a downward direction in a three-dimensional space.

From the above embodiments, it can be seen that by performing coordinate transformation on a target direction corresponding to a flight direction control instruction, the embodiments of the present disclosure enable a user to perform control directly according to his/her own control target without transformation of control targets from a perspective of an aircraft, thereby greatly reducing the difficulty in controlling the aircraft.

Fig. 4 is another flow chart showing a flight control method according to an exemplary embodiment. As shown in Fig. 4, the method may include the steps as follows.

In Step 402, an aircraft is started to fly.

In Step 404, the aircraft receives a flight direction control instruction sent by a control device. In the present embodiment, signal transmission and reception between the control device and the aircraft may be implemented via a remote control device. For instance, the remote control device may be a dedicated aircraft remote control or may be implemented by an APP installed on a smart device such as a smart phone and a smart tablet computer, wherein, wireless signals may be transmitted and received between the remote control device and the aircraft by means of Wi-Fi, Bluetooth and the like.

In Step 406, a corresponding instruction type is identified by reading of a value of a type identifier in the flight direction control instruction. When the type identifier has a first value, it is indicated that a target direction is obtained on the basis of a polar coordinate system, and it is necessary to proceed to Step 408. When the type identifier has a second value, it is indicated that the target direction is obtained on the basis of a flight coordinate system of the aircraft, and it is necessary to proceed to Step 410.

In the present embodiment, the control device serves as an origin of the polar coordinate system, and the aircraft serves as an origin of the flight coordinate system. When the control device sends a flight direction control instruction on the basis of the polar coordinate system, a corresponding target direction is obtained on the basis of the polar coordinate system, thereby facilitating the implementation of effective flight control by the user when it is difficult to distinguish flight attitudes of the aircraft (particularly, a four-axis aircraft). However, the aircraft is required to transform the corresponding target direction to one in its flight coordinate system so that a flight task can be smoothly fulfilled by the aircraft. When the control device sends a flight direction control instruction on the basis of the flight coordinate system, a corresponding target direction is obtained on the basis of the flight coordinate system, that is, the user sends the flight direction control instruction from a perspective of the aircraft, and the aircraft may directly execute the corresponding flight direction control instruction so as to smoothly fulfill the flight task.

In the present embodiment, a corresponding format changeover switch may be provided on the remote control device so that the user sends a required type of flight direction control instruction via the switch.

In the present embodiment, a format of a control instruction may be set in advance, and one or more data bits in the control instruction serve as a type identifier, which can thereby present a control mode for the user. It is assumed that a type identifier includes two data bits, the target direction in the flight direction control instruction is obtained on the basis of the polar coordinate system when the type identifier is '00' namely a first value, and the target direction in the flight direction control instruction is obtained on the basis of the flight coordinate system when the type identifier is '01' namely a second value.

In Step 404', signal transmission and reception operations are executed between the aircraft and the control device.

In Step 406', the aircraft determines the relative position relationship between the aircraft and the control device according to signal transmission and reception conditions.

In the present embodiment, the relative position relationship between the aircraft and the control device is determined by Step 404'-406', wherein there is no constraint on the sequence of Steps 404'-406' and Steps 404-406. The aircraft may execute Steps 404'-406' in accordance with a preset mode, for instance, the aircraft may execute Steps 404'-406' in accordance with a preset period or may execute Steps 404'-406' after receiving the flight direction control instruction.

In the present embodiment, the relative position relationship between the aircraft and the control device may be determined on the basis of signal transmission and reception between the aircraft and the control device (namely the remote control device). Some modes for determining the relative position relationship are illustrated below on the basis of the above signal transmission and reception modes.

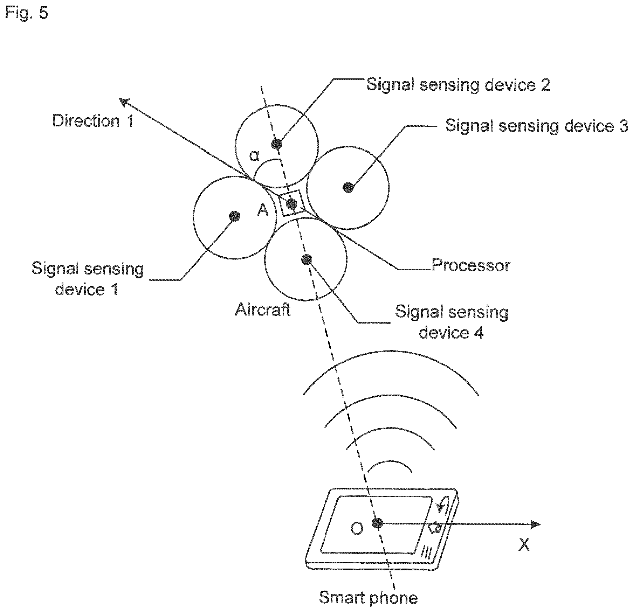

Implementation 1As an exemplary implementation, a sensing signal transmitted by a signal transceiver device at a control device is sensed respectively via a plurality of signal sensing devices installed at different positions on an aircraft. Signal strengths sensed respectively by the signal sensing devices are compared, wherein projections of a signal sensing device corresponding to a highest signal strength, a signal sensing device corresponding to a lowest signal strength and the control device, to a vertical direction, are located on a same straight line, and the signal sensing device corresponding to the highest signal strength and the control device are adjacent nodes on the straight line. A relative position relationship is determined according to installation positions of the signal sensing devices on the aircraft. As shown in Fig. 5, it is assumed that a user takes a smart phone as a remote control device so as to implement remote control of an aircraft. The smart phone is configured with a signal transceiver device for any wireless signal, and a sensing signal is sent via the signal transceiver device. A plurality of signal sensing devices is provided at different positions on the aircraft. For instance, in a four-axis aircraft shown in Fig. 5, a signal sensing device 1, a signal sensing device 2, a signal sensing device 3, a signal sensing device 4 and the like are provided respectively. Each signal sensing device senses the above sensing signal, and informs a processor on the aircraft of a sensed signal strength, and the processor compares the signal strengths to obtain a signal sensing device corresponding to a highest signal strength and a signal sensing device corresponding to a lowest signal strength.

It is assumed that the signal strength sensed by the signal sensing device 4 is highest and the signal strength sensed by the signal sensing device 2 is lowest, it is considered that projections of the control device (namely the remote control device such as the smart phone in Fig. 5), the signal sensing device 4 and the signal sensing device 2 to the vertical direction are located on a same straight line. The aircraft may assume that the orientation of the control device is a certain fixed direction, and a polar coordinate system may be determined accordingly, for instance, the polar coordinate system OX shown in Fig. 5.

It is assumed that the aircraft is located at a point A (ρ, θ) in the polar coordinate system OX, where ρ is a distance of OA, and may be calculated according to sensed signal strengths by the signal sensing device 4 and the signal sensing device 2 (for instance, correspondences between the sensed signal strengths and the distances are stored in advance). Or, a relative distance mode may be adopted. For instance, a point A recorded at a certain moment serves as an origin, so a subsequent distance variation adopts a relative distance variation with respect to the point A. θ is an included angle between OA and OX, and may be obtained by calculation after the orientation of a polar axis (namely an X axis) of the polar coordinate system OX is determined.

Furthermore, because the installation position of each signal sensing device on the aircraft is determined in advance, a current attitude of the aircraft and a deviation angle α between a direction 1 that the aircraft is facing and a line OA may be obtained on the basis of a coordinate position of the point A in the polar coordinate system OX, so in a flight drive process of the aircraft, the deviation angle α can be taken into consideration, and it is unnecessary for the control device to get a real-time attitude of the aircraft.

Implementation 2As another exemplary implementation, detection signals are sent to a signal transceiver device at a control device simultaneously via a plurality of signal transmitting devices installed at different positions on the aircraft; a detection signal first received by the signal transceiver device and a detection signal last received by the signal transceiver device are determined according to a received response message returned by the signal transceiver device, wherein projections of signal transmitting devices corresponding to the detection signals and the control device to a vertical direction are located on a same straight line, and a signal transmitting device corresponding to the first received detection signal and the control device are adjacent nodes on the straight line. A relative position relationship is determined according to installation positions of the signal transmitting devices on the aircraft.

As shown in Fig. 6, a signal transmitting device 1, a signal transmitting device 2, a signal transmitting device 3, a signal transmitting device 4 and the like are provided at different positions on an aircraft, a signal transceiver device is provided at a control device (namely a smart phone), and the signal transceiver device may receive a detection signal sent by each signal transmitting device on the aircraft.

Because installation positions of all the signal transmitting devices are different, relative distances between respective signal transmitting devices and the smart phone are different, so when all of the signal transmitting devices transmit detection signals simultaneously, the signal transceiver device in the smart phone will receive these detection signals at different moments. An identifier of each signal detection device may be contained in the corresponding transmitted detection signal, so the smart phone may distinguish and record a receiving sequence of the corresponding detection signal of each signal transmitting device.

For instance, as shown in Fig. 6, it is assumed that the signal transmitting device 1, the signal transmitting device 2, the signal transmitting device 3 and the signal transmitting device 4 correspond to receiving time t1, receiving time t2, receiving time t3 and receiving time t4, t4 is minimum and t2 is maximum, it is considered that projections of the control device (namely a remote control device such as the smart phone in Fig. 6), the signal transmitting device 4 and the signal transmitting device 2, to a vertical direction, are located on a same straight line. Then, a determination mode for a relative position relationship is similar to the embodiment shown in Fig. 5, which will not be elaborated herein.

Implementation 3As another exemplary implementation, positioning devices (such as Global Positioning System (GPS) chips and Beidou positioning chips) may be installed on an aircraft and a remote control device of a control device respectively, so as to be configured to obtain positioning information (such as longitude and latitude information) about the aircraft and about the remote control device respectively. Thus, a relative position relationship therebetween may be calculated by sharing of positioning information between the aircraft and the remote control device.In Step 408, the aircraft transforms a target direction in the flight direction control instruction according to the relative position relationship between the aircraft and the control device.In Step 410, the instruction is executed to drive the aircraft to fly towards the target direction.In the present embodiment, in the case of proceeding to Step 406, the aircraft directly executes the received flight direction control instruction; and in the case of proceeding to Step 408, the aircraft needs to transform the target direction in the received flight direction control instruction and performs drive control in accordance with the transformed target direction.When the flight direction control instruction is generated on the basis of a polar coordinate system, the aircraft may be controlled by flight control modes corresponding to different target directions.

### 1. Forward and backward flight

When the flight direction control instruction refers to forward flight or backward flight, the aircraft is driven to fly along a direction of a connecting line between the aircraft and a control device so that a length value in coordinate information varies and an angle value does not vary.

As shown in Fig. 7, it is assumed that the control device is located at a point O, and a polar coordinate system OX with the point O as an origin is established. The aircraft is located at a point A and the coordinate information is (ρ, θ), and it is indicated that the length of a segment OA is ρ, and an included angle between OX and OA is θ.

When the flight direction control instruction sent by the control device refers to forward flight, the aircraft shall fly along an extension direction of a line OA by means of power adjustment and allocation for each drive component (such as drive motors on four axes of a four-axis aircraft). It is assumed that the aircraft flies to a point A' and its coordinate information is changed to (ρ', θ).In the above process, the control device does not need to focus on a real-time attitude of the aircraft at the point A. For instance, the orientation of the aircraft may not be an OA direction, but the aircraft can self-adjust its real-time attitude and flight direction on the basis of the relative position relationship between the aircraft itself and the control device and the coordinate information about the point A, thereby smoothly flying to point A'. Similarly, when the flight direction control instruction refers to backward flight, the aircraft shall make ρ decreased and θ unvaried, that is, the aircraft shall fly along a direction of a line AO.

### 2. Leftward and rightward flight

When the flight direction control instruction refers to left turn or right turn, the aircraft is driven to fly along a direction perpendicular to a connecting line between the aircraft and a control device so that an angle value in coordinate information varies and a length value does not vary.

As shown in Fig. 8, it is assumed that the control device is located at a point O, and a polar coordinate system OX with the point O as an origin is established. The aircraft is located at a point A and the coordinate information is (ρ, θ), and it is indicated that the length of a segment OA is ρ, and an included angle between the OX and the OA is θ.

When the flight direction control instruction sent by the control device refers to left turn, the aircraft shall always fly along a direction perpendicular to a connecting line between the aircraft itself and the point O by means of power adjustment and allocation for each drive component (such as drive motors on four axes of a four-axis aircraft). In other words, the aircraft flies along a circular arc with the point O serving as the centre of a circle and the OA serving as a radius, and the orientation of the aircraft in a flight process is tangent to the circular arc. For instance, the aircraft flies from the point A to a point A" and the coordinate information is changed to (ρ, θ').In the above process, a flight route and control process of the aircraft completely take the point O where the control device is located as the center, thereby facilitating the simplification of the flight control process of the control device. Similarly, when the flight direction control instruction refers to right turn, the aircraft shall make ρ unvaried and θ decreased, that is, the aircraft shall fly along a right tangential direction of the OA.

### 3. Oblique flight

When the flight direction control instruction refers to oblique flight, a straight component and a rotational component contained in the flight direction control instruction are extracted, the straight component corresponding to forward flight or backward flight of the aircraft, and the rotational component corresponding to left turn or right turn of the flight. The aircraft is driven according to the straight component and the rotational component so that a length value in coordinate information varies in accordance with the straight component and an angle value varies in accordance with the rotational component.

As shown in Fig. 9, it is assumed that the control device is located at a point O, and a polar coordinate system OX with point O as an origin is established. The aircraft is located at a point A and the coordinate information is (ρ, θ), and it is indicated that the length of a segment OA is ρ, and an included angle between the OX and the OA is θ.

An oblique direction refers to a direction, which is not a pure forward-backward direction or leftward-rightward direction, but contains components of both the forward-backward direction and the leftward-rightward direction. Thus, when the flight direction control instruction sent by the control device refers to oblique flight, the aircraft shall be controlled to fly by decomposing the oblique direction into the forward-backward direction (namely the straight component) and the leftward-rightward direction (namely the rotational component). For instance, the aircraft is located at a point A (ρ, θ), and on the basis of a target direction of the flight direction control instruction, the straight component obtained by decomposition needs to be used to adjust p, the rotational component obtained by decomposition needs to be used to adjust θ, and adjusted ρ" and θ" are obtained respectively, that is, a point B (ρ", θ") is taken as a flight target.

In correspondence to the above embodiments for the flight control method, the embodiments of the present disclosure also provide a flight control apparatus.

Fig. 10 is a block diagram of a flight control apparatus according to an exemplary embodiment. Referring to Fig. 10, the apparatus includes a relationship determination unit 1001, a coordinate system determination unit 1002, a receiving unit 1003 and a drive unit 1004, in which:the relationship determination unit 1001 is configured to determine a relative position relationship between an aircraft and a control device; the coordinate system determination unit 1002 is configured to determine a polar coordinate system with the control device as an origin according to the relative position relationship; the receiving unit 1003 is configured to receive a flight direction control instruction sent by the control device, the flight direction control instruction being generated on the basis of the polar coordinate system; and the drive unit 1004 is configured to drive, according to coordinate information about the aircraft in the polar coordinate system, the aircraft to fly in accordance with the flight direction control instruction.

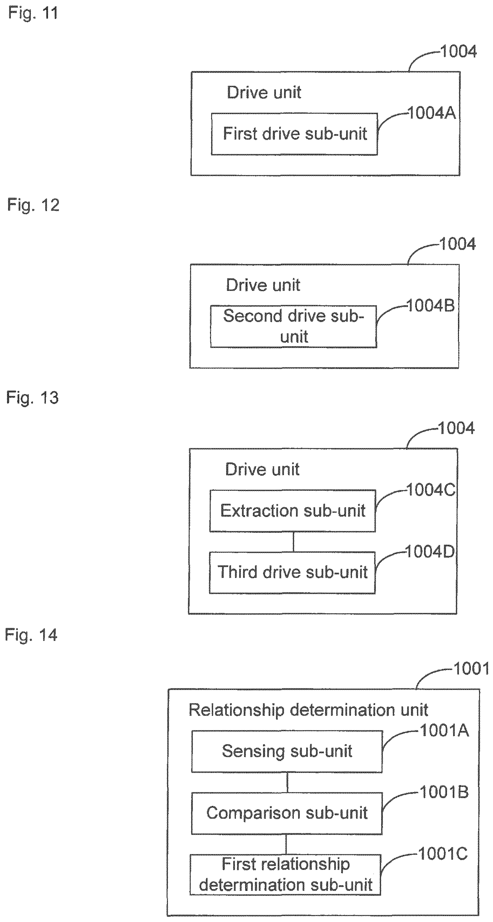

As shown in Fig. 11, which is another block diagram of a flight control apparatus according to an exemplary embodiment, on the basis of the above embodiment shown in Fig. 10, the drive unit 1004 according to this embodiment may include: a first drive sub-unit 1004A.The first drive sub-unit 1004A is configured to, when the flight direction control instruction refers to forward flight or backward flight, drive the aircraft to fly along a direction of a connecting line between the aircraft and the control device so that a length value in the coordinate information varies and an angle value does not vary.

As shown in Fig. 12, which is another block diagram of a flight control apparatus according to an exemplary embodiment, on the basis of the above embodiment shown in Fig. 10, the drive unit 1004 according to this embodiment may include: a second drive sub-unit 1004B.The second drive sub-unit 1004B is configured to, when the flight direction control instruction refers to left turn or right turn, drive the aircraft to fly along a direction perpendicular to a connecting line between the aircraft and the control device so that an angle value in the coordinate information varies and a length value does not vary.

As shown in Fig. 13, which is another block diagram of a flight control apparatus according to an exemplary embodiment, on the basis of the above embodiment shown in Fig. 10, the drive unit 1004 according to this embodiment may include: an extraction sub-unit 1004C and a third drive sub-unit 1004D, in which: the extraction sub-unit 1004C is configured to, when the flight direction control instruction refers to oblique flight, extract a straight component and a rotational component contained in the flight direction control instruction, the straight component corresponding to forward flight or backward flight of the aircraft, and the rotational component corresponding to left turn or right turn of the flight; and the third drive sub-unit 1004D is configured to drive the aircraft according to the straight component and the rotational component so that a length value in the coordinate information varies in accordance with the straight component and an angle value varies in accordance with the rotational component.

As shown in Fig. 14, which is another block diagram of a flight control apparatus according to an exemplary embodiment, on the basis of the above embodiment shown in Fig. 10, the relationship determination unit 1001 according to this embodiment may include: a sensing sub-unit 1001A, a comparison sub-unit 1001B and a first relationship determination sub-unit 1001C, in which: the sensing sub-unit 1001A is configured to sense a sensing signal transmitted by a signal transceiver device at the control device respectively via a plurality of signal sensing devices installed at different positions on the aircraft; the comparison sub-unit 1001B is configured to compare signal strengths respectively sensed by the signal sensing devices, wherein projections of a signal sensing device corresponding to a highest signal strength, a signal sensing device corresponding to a lowest signal strength and the control device, to the vertical direction, are located on a same straight line, and the signal sensing device corresponding to the highest signal strength and the control device are adjacent nodes on the straight line; and the first relationship determination sub-unit 1001C is configured to determine the relative position relationship according to installation positions of the signal sensing devices on the aircraft.

It is important to note that arrangements of the sensing sub-unit 1001A, the comparison sub-unit 1001B and the first relationship determination sub-unit 1001C in the above apparatus embodiment shown in Fig. 14 may also be contained in the above apparatus embodiments shown in Figs. 11-13, and there are no limits specifically made in the embodiment of the disclosure.

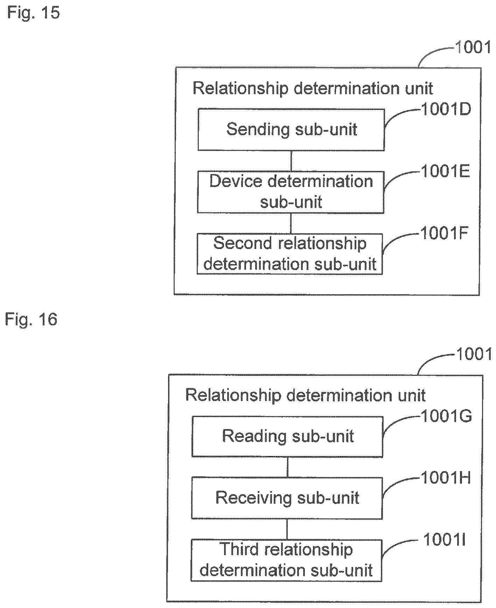

As shown in Fig. 15, which is another block diagram of a flight control apparatus according to an exemplary embodiment, on the basis of the above embodiment shown in Fig. 10, the relationship determination unit 1001 according to this embodiment may include: a sensing sub-unit 1001D, a device determination sub-unit 1001E and a second relationship determination sub-unit 1001F, in which: the sending sub-unit 1001D is configured to send detection signals to a signal transceiver device at the control device simultaneously via a plurality of signal transmitting devices installed at different positions on the aircraft; the device determination sub-unit 1001E is configured to determine a detection signal first received by the signal transceiver device and a detection signal last received by the signal transceiver device according to a received response message returned by the signal transceiver device, herein projections of the signal transmitting devices corresponding to the detection signals and the control device to a vertical direction are located on a same straight line, and a signal transmitting device corresponding to the first received detection signal and the control device are adjacent nodes on the straight line; and the second relationship determination sub-unit 1001F is configured to determine the relative position relationship according to installation positions of the signal transmitting devices on the aircraft.

It is important to note that arrangements of the sensing sub-unit 1001D, the device determination sub-unit 1001E and the second relationship determination sub-unit 1001F in the above apparatus embodiment shown in Fig. 15 may also be contained in the above apparatus embodiments shown in Figs. 11-13, and there are no limits specifically made in the embodiment of the disclosure.

As shown in Fig. 16, which is another block diagram of a flight control apparatus according to an exemplary embodiment, on the basis of the above embodiment shown in Fig. 10, the relationship determination unit 1001 according to this embodiment may include: a reading sub-unit 1001G, a receiving sub-unit 1001H and a third relationship determination sub-unit 1001I, in which: the reading sub-unit 1001G is configured to read first positioning information about the aircraft via a first positioning device installed on the aircraft; the receiving sub-unit 1001H is configured to receive second positioning information sent by a signal transceiver device at the control device, the second positioning information being generated by a second positioning device at the control device; and the third relationship determination sub-unit 1001I is configured to determine the relative position relationship according to the first positioning information and the second positioning information.

It is important to note that arrangements of the reading sub-unit 1001G, the receiving sub-unit 1001H and the third relationship determination sub-unit 1001I in the above apparatus embodiment shown in Fig. 16 may also be contained in the above apparatus embodiments shown in Figs. 11-13, and there are no limits specifically made in the embodiment of the disclosure.

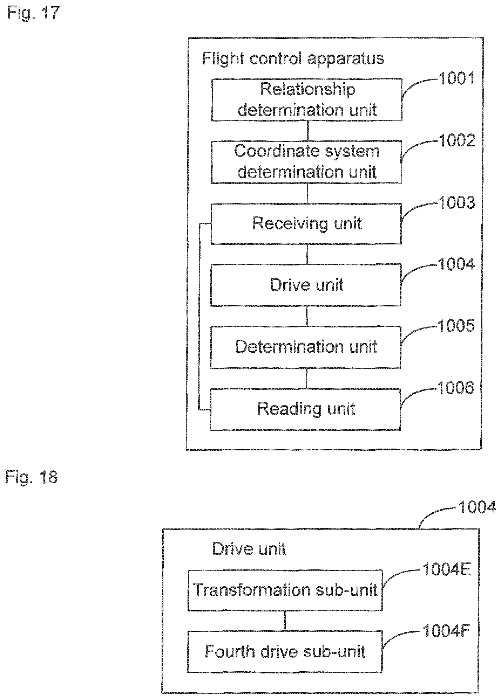

As shown in Fig. 17, which is another block diagram of a flight control apparatus according to an exemplary embodiment, on the basis of the above embodiment shown in Fig. 10, the apparatus according to this embodiment may further include: a reading unit 1006 and a determination unit 1005, in which: the reading unit 1006 is configured to read a type identifier contained in the flight direction control instruction; and the determination unit 1005 is configured to determine the type of the flight direction control instruction according to the type identifier, herein when the type identifier has a first value, it is indicated that the flight direction control instruction is generated on the basis of the polar coordinate system; and when the type identifier has a second value, it is indicated that the flight direction control instruction is generated on the basis of a flight coordinate system of the aircraft, then the drive unit 1004 directly executes the flight direction control instruction so as to drive the aircraft.

It is important to note that arrangements of the reading unit 1006 and the determination unit 1005 in the above apparatus embodiment shown in Fig. 17 may also be contained in the above apparatus embodiments shown in Figs. 11-16, and there are no limits specifically made in the embodiment of the disclosure.

As shown in Fig. 18, which is another block diagram of a flight control apparatus according to an exemplary embodiment, on the basis of the above embodiment shown in Fig. 10, the drive unit 1004 according to this embodiment may include: a transformation sub-unit 1004E and a fourth drive sub-unit 1004F; in which: the transformation sub-unit 1004E is configured to transform a target direction corresponding to the flight direction control instruction from the polar coordinate system to a flight coordinate system of the aircraft; and the fourth drive sub-unit 1004F is configured to drive the aircraft in accordance with the transformed target direction.

It is important to note that arrangements of the transformation sub-unit 1004E and the fourth drive sub-unit 1004F in the above apparatus embodiment shown in Fig. 18 may also be contained in the above apparatus embodiments shown in Figs. 11-17, and there are no limits specifically made in the embodiment of the disclosure.

With respect to the apparatuses in the above embodiments, the specific manners for performing operations for individual modules therein have been described in detail in the embodiments regarding the method, which will not be elaborated herein.

Due to the fact that apparatus embodiments substantially correspond to the method embodiments, please refer to description of the method embodiments for more detailed description. The apparatus embodiments described above are merely schematic. The units illustrated as separate components may be or may not be physically separated. Components for unit display may be or may not be physical units. That is, the components may be located at a place or may be distributed on a plurality of network units. The purposes of the solutions in the embodiments of the present disclosure may be fulfilled by selecting some or all modules according to actual requirements. Those skilled in the art may understand and implement the solutions without creative work.

Correspondingly, the embodiments of the present disclosure also provide a flight control apparatus, which includes: a processor; and a memory configured to store instructions executable by the processor, in which the processor is configured to: determine a relative position relationship between an aircraft and a control device; determine a polar coordinate system with the control device as an origin according to the relative position relationship; receive a flight direction control instruction sent by the control device, the flight direction control instruction being generated on the basis of the polar coordinate system; and drive, according to coordinate information about the aircraft in the polar coordinate system, the aircraft to fly in accordance with the flight direction control instruction.

Correspondingly, the embodiments of the present disclosure also provide a terminal, which includes a memory and one or more programs, wherein the one or more programs are stored in the memory and executed by one or more processors, the one or more programs include instructions configured to perform the following operations: determining a relative position relationship between an aircraft and a control device; determining a polar coordinate system with the control device as an origin according to the relative position relationship; receiving a flight direction control instruction sent by the control device, the flight direction control instruction being generated on the basis of the polar coordinate system; and driving, according to coordinate information about the aircraft in the polar coordinate system, the aircraft to fly in accordance with the flight direction control instruction.

Fig. 19 is a block diagram of an apparatus 1900 for flight control according to an exemplary embodiment. For instance, the apparatus 1900 may be a mobile phone, a computer, a digital broadcast terminal, a messaging device, a game console, a tablet device, a medical device, exercise equipment, a personal digital assistant and the like.

Referring to Fig. 19, the apparatus 1900 may include one or more of the following components: a processing component 1902, a memory 1904, a power supply component 1906, a multimedia component 1908, an audio component 1910, an input/output (I/O) interface 1912, a sensor component 1914 and a communication component 1916.The processing component 1902 typically controls overall operations of the apparatus 1900, such as the operations associated with display, telephone calls, data communications, camera operations, and recording operations. The processing component 1902 may include one or more processors 1920 to execute instructions to perform all or part of the steps in the above described methods. Moreover, the processing component 1902 may include one or more modules which facilitate the interaction between the processing component 1902 and other components. For instance, the processing component 1902 may include a multimedia module to facilitate the interaction between the multimedia component 1908 and the processing component 1902.The memory 1904 is configured to store various types of data to support the operation of the apparatus 1900. Examples of such data include instructions for any application or method operated on the apparatus 1900, contact data, phonebook data, messages, pictures, videos, etc. The memory 1904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1906 provides power to various components of the apparatus 1900. The power supply component 1906 may include a power management system, one or more power supplies, and any other components associated with the generation, management, and distribution of power in the apparatus 1900.The multimedia component 1908 includes a screen providing an output interface between the apparatus 1900 and a user. In some embodiments, the screen may include a liquid crystal display (LCD) and a touch panel (TP). If the screen includes a TP, the screen may be implemented as a touch screen to receive input signals from the user. The TP includes one or more touch sensors to sense touches, swipes, and gestures on the TP. The touch sensors may not only sense a boundary of a touch or swipe action, but also sense a period of time and a pressure associated with the touch or swipe action. In some embodiments, the multimedia component 1908 includes a front camera and/or a rear camera. The front camera and the rear camera may receive external multimedia data while the apparatus 1900 is in an operation mode, such as a photographing mode or a video mode. Each of the front camera and the rear camera may be a fixed optical lens system or may have optical zoom capability.The audio component 1910 is configured to output and/or input audio signals. For instance, the audio component 1910 includes a microphone (MIC) configured to receive an external audio signal when the apparatus 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker configured to output audio signals.The I/O interface 1912 provides an interface between the processing component 1902 and peripheral interface modules, such as a keyboard, a click wheel, buttons, and the like. The buttons may include, but are not limited to, a home button, a volume button, a starting button, and a locking button.The sensor component 1914 includes one or more sensors configured to provide status assessments of various aspects of the apparatus 1900. For instance, the sensor component 1914 may detect an open/closed status of the apparatus 1900, relative positioning of components, e.g., a display and a keypad, of the apparatus 1900, a change in position of the apparatus 1900 or a component of the apparatus 1900, a presence or absence of user contact with the apparatus 1900, an orientation or an acceleration/deceleration of the apparatus 1900, and a change in temperature of the apparatus 1900. The sensor component 1914 may include a proximity sensor configured to detect the presence of nearby objects without any physical contact. The sensor component 1914 may also include a light sensor, such as a CMOS or CCD image sensor, for use in imaging applications. In some embodiments, the sensor component 1914 may also include an accelerometer sensor, a gyroscope sensor, a magnetic sensor, a pressure sensor, or a temperature sensor.The communication component 1916 is configured to facilitate communication, wired or wirelessly, between the apparatus 1900 and other devices. The apparatus 1900 can access a wireless network based on a communication standard, such as WiFi, 2G, 3G, or a combination thereof. In one exemplary embodiment, the communication component 1916 receives a broadcast signal or broadcast associated information from an external broadcast management system via a broadcast channel. In one exemplary embodiment, the communication component 1916 further includes a near field communication (NFC) module to facilitate short-range communications. For instance, the NFC module may be implemented based on a radio frequency identification (RFID) technology, an infrared data association (IrDA) technology, an ultra-wideband (UWB) technology, a Bluetooth (BT) technology, and other technologies.In exemplary embodiments, the apparatus 1900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.In exemplary embodiments, there is also provided a non-transitory computer-readable storage medium including instructions, such as the memory 1904 including instructions, executable by the processor 820 in the apparatus 1900, for performing the above-described methods. For instance, the non-transitory computer-readable storage medium may be a ROM, a random access memory (RAM), a CD-ROM, a magnetic tape, a floppy disc, an optical data storage device, and the like. Other implementation solutions of the embodiments of the present disclosure will be apparent to those skilled in the art from consideration of the specification and practice of the disclosure disclosed here. This application is intended to cover any variations, uses, or adaptations of the embodiments of the present disclosure following the general principles thereof and including such departures from the embodiments of the present disclosure as come within known or customary practice in the art. It is intended that the specification and examples be considered as exemplary only, with a true scope of the embodiments of the present disclosure being indicated by the following claims.

It will be appreciated that the embodiments of the present disclosure are not limited to the exact construction that has been described above and illustrated in the accompanying drawings, and that various modifications and changes can be made without departing from the scope thereof. It is intended that the scope of the embodiments of the present disclosure only be limited by the appended claims.

### INDUSTRIAL APPLICABILITY

By establishing a polar coordinate system with a user as an origin and adopting a flight direction control instruction based on the polar coordinate system, the embodiments of the present disclosure enable the user to take himself/herself as the center in a control process without consideration and control from a perspective of an aircraft, thereby facilitating the simplification of operations and reducing the difficulty in controlling the aircraft.

## Claims

1. A flight control method comprising:
determining (202) a relative position relationship between an aircraft and a control device, the control device being a single device configured to control the aircraft;
determining (204) a polar coordinate system with the control device as an origin according to the relative position relationship;
receiving (206) a flight direction control instruction sent by the control device, the flight direction control instruction being generated on the basis of the polar coordinate system; and
controlling (208), according to coordinate information about the aircraft in the polar coordinate system, the aircraft to fly in accordance with the flight direction control instruction;
the method being
**characterized in that** controlling the aircraft to fly in accordance with the flight direction control instruction comprises:
when the flight direction control instruction refers to forward flight or backward flight, controlling the aircraft to fly along a direction of a connecting line between the aircraft and the control device so that a length value in the coordinate information varies and an angle value does not vary; or
when the flight direction control instruction refers to left turn or right turn, controlling the aircraft to fly along a direction perpendicular to a connecting line between the aircraft and the control device so that an angle value in the coordinate information varies and a length value does not vary,
the method being further **characterized in that** determining the relative position relationship between the aircraft and the control device comprises:
sensing a sensing signal transmitted by a signal transceiver device at the control device respectively via a plurality of signal sensing devices installed at different positions on the aircraft; comparing signal strengths sensed respectively by the signal sensing devices, wherein projections, of a signal sensing device corresponding to a highest signal strength, a signal sensing device corresponding to a lowest signal strength and the control device, to a vertical direction are located on a same straight line, and the signal sensing device corresponding to the highest signal strength and the control device are adjacent nodes on the straight line; and determining the relative position relationship according to installation positions of the signal sensing devices on the aircraft; or
sending detection signals to a signal transceiver device at the control device simultaneously via a plurality of signal transmitting devices installed at different positions on the aircraft; determining a detection signal first received by the signal transceiver device and a detection signal last received by the signal transceiver device according to a received response message returned by the signal transceiver device, projections, of signal transmitting devices corresponding to the detection signals and the control device, to a vertical direction being located on a same straight line, and a signal transmitting device corresponding to the first received detection signal and the control device being adjacent nodes on the straight line; and determining the relative position relationship according to installation positions of the signal transmitting devices on the aircraft.

2. The method of claim 1, wherein controlling the aircraft to fly in accordance with the flight direction control instruction comprises:
when the flight direction control instruction refers to oblique flight, extracting a straight component and a rotational component contained in the flight direction control instruction, the straight component corresponding to forward flight or backward flight of the aircraft, and the rotational component corresponding to left turn or right turn of the flight; and
controlling the aircraft according to the straight component and the rotational component so that a length value in the coordinate information varies in accordance with the straight component and an angle value varies in accordance with the rotational component.

3. The method of any of claims 1 or 2, wherein determining the relative position relationship between the aircraft and the control device comprises:
reading first positioning information about the aircraft via a first positioning device installed on the aircraft;
receiving second positioning information sent by a signal transceiver device at the control device, the second positioning information being generated by a second positioning device at the control device; and
determining the relative position relationship according to the first positioning information and the second positioning information.

4. The method of any preceding claim, further comprising:
reading a type identifier contained in the flight direction control instruction; and
determining the type of the flight direction control instruction according to the type identifier, wherein when the type identifier has a first value, it is indicated that the flight direction control instruction is generated on the basis of the polar coordinate system; and when the type identifier has a second value, it is indicated that the flight direction control instruction is generated on the basis of a flight coordinate system of the aircraft, then the flight direction control instruction is directly executed so as to control the aircraft.

5. The method of any preceding claim, wherein controlling the aircraft to fly in accordance with the flight direction control instruction comprises:
transforming a target direction corresponding to the flight direction control instruction from the polar coordinate system to a flight coordinate system of the aircraft; and controlling the aircraft to fly in accordance with the transformed target direction.

6. A flight control apparatus comprising:
a relationship determination unit (1001) configured to determine a relative position relationship between an aircraft and a control device, the control device being a single device configured to control the aircraft;
a coordinate system determination unit (1002) configured to determine a polar coordinate system with the control device as an origin according to the relative position relationship;
a receiving unit (1003) configured to receive a flight direction control instruction sent by the control device, the flight direction control instruction being generated on the basis of the polar coordinate system; and
a drive unit (1004) configured to control, according to coordinate information about the aircraft in the polar coordinate system, the aircraft to fly in accordance with the flight direction control instruction;
the apparatus being **characterized in that**
the drive unit (1004) comprises:
a first drive sub-unit (1004A) configured to, when the flight direction control instruction refers to forward flight or backward flight, control the aircraft to fly along a direction of a connecting line between the aircraft and the control device so that a length value in the coordinate information varies and an angle value does not vary; or
a second drive sub-unit (1004B) configured to, when the flight direction control instruction refers to left turn or right turn, drive the aircraft to fly along a direction perpendicular to a connecting line between the aircraft and the control device so that an angle value in the coordinate information varies and a length value does not vary,
further **characterized in that** the relationship determination unit (1001) comprises a sensing sub-unit (1001A) configured to sense a sensing signal transmitted by a signal transceiver device at the control device respectively via a plurality of signal sensing devices installed at different positions on the aircraft; a comparison sub-unit (1001B) configured to compare signal strengths sensed respectively by the signal sensing devices, wherein projections, of a signal sensing device corresponding to a highest signal strength, a signal sensing device corresponding to a lowest signal strength and the control device, to a vertical direction are located on a same straight line, and the signal sensing device corresponding to the highest signal strength and the control device are adjacent nodes on the straight line; and a first relationship determination sub-unit (1001C) configured to determine the relative position relationship according to installation positions of the signal sensing devices on the aircraft; or
wherein the relationship determination unit (1001) comprises: a sending sub-unit (1001D) configured to send detection signals to a signal transceiver device at the control device simultaneously via a plurality of signal transmitting devices installed at different positions on the aircraft; a device determination sub-unit (1001E) configured to determine a detection signal first received by the signal transceiver device and a detection signal last received by the signal transceiver device according to a received response message returned by the signal transceiver device, projections, of signal transmitting devices corresponding to the detection signals and the control device, to a vertical direction being located on a same straight line, and a signal transmitting device corresponding to the first received detection signal and the control device being adjacent nodes on the straight line; and a second relationship determination sub-unit (1001F) configured to determine the relative position relationship according to installation positions of the signal transmitting devices on the aircraft.

7. The apparatus of claim 6, wherein the drive unit (1004) comprises:
an extraction sub-unit (1004C) configured to, when the flight direction control instruction refers to oblique flight, extract a straight component and a rotational component contained in the flight direction control instruction, the straight component corresponding to forward flight or backward flight of the aircraft, and the rotational component corresponding to left turn or right turn of the flight; and
a third drive sub-unit (1004D) configured to control the aircraft according to the straight component and the rotational component so that a length value in the coordinate information varies in accordance with the straight component and an angle value varies in accordance with the rotational component.

8. The apparatus of claim 6 or 7, wherein the relationship determination unit (1001) further comprises:
a reading sub-unit (1001G) configured to read first positioning information about the aircraft via a first positioning device installed on the aircraft;
a receiving sub-unit (1001H) configured to receive second positioning information sent by a signal transceiver device at the control device, the second positioning information being generated by a second positioning device at the control device; and
a third relationship determination sub-unit (100II) configured to determine the relative position relationship according to the first positioning information and the second positioning information.

9. The apparatus of claim 6, further comprising:
a reading unit (1006) configured to read a type identifier contained in the flight direction control instruction; and
a determination unit (1005) configured to determine the type of the flight direction control instruction according to the type identifier, wherein when the type identifier has a first value, it is indicated that the flight direction control instruction is generated on the basis of the polar coordinate system; and when the type identifier has a second value, it is indicated that the flight direction control instruction is generated on the basis of a flight coordinate system of the aircraft, then the drive unit (1001) directly executes the flight direction control instruction so as to control the aircraft.

10. The apparatus of claim 6, wherein the drive unit (1004) comprises:
a transformation sub-unit (1004E) configured to transform a target direction corresponding to the flight direction control instruction from the polar coordinate system to a flight coordinate system of the aircraft; and
a fourth drive sub-unit (1004F) configured to control the aircraft to fly in accordance with the transformed target direction.

11. A computer program including instructions for executing the steps of a flight control method according to any one of claims 1 to 5 when said program is executed by a computer.

## Patentansprüche

1. Flugsteuerungsverfahren, umfassend:
Bestimmen (202) einer relativen Positionsbeziehung zwischen einem Luftfahrzeug und einer Steuerungsvorrichtung, wobei die Steuerungsvorrichtung eine einzelne Vorrichtung ist, konfiguriert, um das Luftfahrzeug zu steuern;
Bestimmen (204) eines Polarkoordinatensystems mit der Steuerungsvorrichtung als einen Ursprung gemäß der relativen Positionsbeziehung;
Empfangen (206) einer von der Steuerungsvorrichtung gesendeten Flugrichtungssteuerungsanweisung, wobei die Flugrichtungssteuerungsanweisung auf der Grundlage des Polarkoordinatensystems erzeugt wird; und
Steuern (208), gemäß Koordinateninformationen über das Luftfahrzeug in dem Polarkoordinatensystem, des Luftfahrzeugs, um in Übereinstimmung mit der Flugrichtungssteuerungsanweisung zu fliegen;
wobei das Verfahren **dadurch gekennzeichnet ist, dass** Steuern des Luftfahrzeugs, um in Übereinstimmung mit der Flugrichtungssteuerungsanweisung zu fliegen, umfasst:
wenn die Flugrichtungssteuerungsanweisung sich auf Vorwärtsflug oder Rückwärtsflug bezieht, Steuern des Luftfahrzeugs, um entlang einer Richtung einer Verbindungslinie zwischen dem Luftfahrzeug und der Steuerungsvorrichtung zu fliegen, sodass ein Längenwert in den Koordinateninformationen variiert und ein Winkelwert nicht variiert; oder
wenn die Flugrichtungssteuerungsanweisung sich auf Linksdrehung oder Rechtsdrehung bezieht, Steuern des Luftfahrzeugs, um entlang einer Richtung senkrecht zu einer Verbindungslinie zwischen dem Luftfahrzeug und der Steuerungsvorrichtung zu fliegen, sodass ein Winkelwert in den Koordinateninformationen variiert und ein Längenwert nicht variiert,
wobei das Verfahren weiter **dadurch gekennzeichnet ist, dass** Bestimmen der relativen Positionsbeziehung zwischen dem Luftfahrzeug und der Steuerungsvorrichtung umfasst:
Erfassen eines durch eine Signaltransceivervorrichtung übertragenen Signals an der Steuerungsvorrichtung, jeweils mittels einer Vielzahl von an unterschiedlichen Positionen an dem Luftfahrzeug installierten Signalerfassungsvorrichtungen; Vergleichen von erfassten Signalstärken, jeweils durch die Signalerfassungsvorrichtungen, wobei Projektionen von einer Signalerfassungsvorrichtung, die einer höchsten Signalstärke entspricht, und einer Signalerfassungsvorrichtung, die einer niedrigsten Signalstärke entspricht, und der Steuerungsvorrichtung in eine vertikale Richtung sich auf der gleichen Linie befinden, und die Signalerfassungsvorrichtung, die der höchsten Signalstärke entspricht, und die Steuerungsvorrichtung benachbarte Knoten auf der geraden Linie sind; und Bestimmen der relativen Positionsbeziehung gemäß Installationspositionen der Signalerfassungsvorrichtungen an dem Luftfahrzeug; oder
gleichzeitiges Senden von Detektionssignalen an eine Signaltransceivervorrichtung an der Steuerungsvorrichtung mittels einer Vielzahl von an unterschiedlichen Positionen an dem Luftfahrzeug installierten Signalübertragungungsvorrichtungen; Bestimmen eines zuerst von der Signaltransceivervorrichtung empfangenen Detektionssignals und eines zuletzt von der Signaltransceivervorrichtung empfangenen Detektionssignals gemäß einer von der Signaltransceivervorrichtung zurückgeschickten empfangenen Antwortmitteilung, Projektionen von den Detektionssignalen entsprechenden Signalübertragungsvorrichtungen und der Steuerungsvorrichtung auf eine vertikale Richtung, die sich auf einer gleichen geraden Linie befinden, und wobei eine dem ersten empfangenen Detektionssignal entsprechende Signalübertragungsvorrichtung und die Steuerungsvorrichtung benachbarte Knoten auf der geraden Linie sind; und Bestimmen der relativen Positionsbeziehung gemäß Installationspositionen der Signalübertragungsvorrichtungen an dem Luftfahrzeug.

2. Verfahren nach Anspruch 1, wobei Steuern des Luftfahrzeugs, um in Übereinstimmung mit der Flugrichtungssteuerungsanweisung zu fliegen, umfasst:
wenn sich die Flugrichtungssteuerungsanweisung auf schrägen Flug bezieht, Extrahieren einer geraden Komponente und einer rotatorischen Komponente, die in der Flugrichtungssteuerungsanweisung enthalten sind, wobei die gerade Komponente Vorwärtsflug oder Rückwärtsflug des Luftfahrzeugs entspricht und die rotatorische Komponente Linksdrehung oder Rechtsdrehung des Flugs entspricht; und
Steuern des Luftfahrzeugs gemäß der geraden Komponente und der rotatorischen Komponente, sodass eine Länge in den Koordinateninformationen in Übereinstimmung mit der geraden Komponente variiert und ein Winkelwert in Übereinstimmung mit der rotatorischen Komponente variiert.

3. Verfahren nach einem der Ansprüche 1 oder 2, wobei Bestimmen der relativen Positionsbeziehung zwischen dem Luftfahrzeug und der Steuerungsvorrichtung umfasst:
Lesen erster Positionierungsinformationen über das Luftfahrzeug mittels einer ersten an dem Luftfahrzeug installierten Positionierungsvorrichtung;
Empfangen von durch eine Signaltransceivervorrichtung gesendeten zweiter Positionierungsinformationen an der Steuerungsvorrichtung, wobei die zweiten Positionierungsinformationen durch eine zweite Positionierungsvorrichtung an der Steuerungsvorrichtung erzeugt werden; und
Bestimmen der relativen Positionsbeziehung gemäß den ersten Positionierungsinformationen und den zweiten Positionierungsinformationen.

4. Verfahren nach einem vorstehenden Anspruch, weiter umfassend:
Lesen eines in der Flugrichtungssteuerungsanweisung enthaltenen Typidentifizierers; und
Bestimmen des Typs der Flugrichtungssteuerungsanweisung gemäß dem Typidentifizierer, wobei, wenn der Typidentifizierer einen ersten Wert aufweist, es angezeigt wird, dass die Flugrichtungssteuerungsanweisung auf der Grundlage des Polarkoordinatensystems erzeugt wird; und wenn der Typidentifizierer einen zweiten Wert aufweist, es angezeigt wird, dass die Flugrichtungssteuerungsanweisung auf der Grundlage eines Flugkoordinatensystems des Luftfahrzeugs erzeugt wird, die Flugrichtungssteuerungsanweisung dann direkt ausgeführt wird, um das Luftfahrzeug zu steuern.

5. Verfahren nach einem vorstehenden Anspruch, wobei Steuern des Luftfahrzeugs, um in Übereinstimmung mit der Flugrichtungssteuerungsanweisung zu fliegen, umfasst:
Transformieren einer der Flugrichtungssteuerungsanweisung entsprechenden Zielrichtung von dem Polarkoordinatensystem zu einem Flugkoordinatensystem des Luftfahrzeugs; und
Steuern des Luftfahrzeugs in Übereinstimmung mit der transformierten Zielrichtung.

6. Flugsteuerungseinrichtung, umfassend:
eine Beziehungsbestimmungseinheit (1001), konfiguriert, um eine relative Positionsbeziehung zwischen einem Luftfahrzeug und einer Steuerungsvorrichtung zu bestimmen, wobei die Steuerungsvorrichtung eine einzelne Vorrichtung ist, konfiguriert, um das Luftfahrzeug zu steuern;
eine Koordinatensystembestimmungseinheit (1002), konfiguriert, um ein Polarkoordinatensystem mit der Steuerungsvorrichtung als einen Ursprung gemäß der relativen Positionsbeziehung zu bestimmen;
eine Empfangseinheit (1003), konfiguriert, um eine durch die Steuerungsvorrichtung gesendete Flugrichtungssteuerungsanweisung zu empfangen, wobei die Flugrichtungssteuerungsanweisung auf der Grundlage des Polarkoordinatensystems erzeugt wird; und
eine Antriebseinheit (1004), konfiguriert, um gemäß Koordinateninformationen über das Luftfahrzeug in dem Polarkoordinatensystem das Luftfahrzeug zu steuern, um in Übereinstimmung mit der Flugrichtungssteuerungsanweisung zu fliegen;
wobei die Einrichtung **dadurch gekennzeichnet ist, dass** die Antriebseinheit (1004) umfasst:
eine erste Antriebsuntereinheit (1004A), konfiguriert, um, wenn sich die Flugrichtungssteuerungsanweisung auf Vorwärtsflug oder Rückwärtsflug bezieht, das Luftfahrzeug zu steuern, um entlang einer Richtung einer Verbindungslinie zwischen dem Luftfahrzeug und der Steuerungsvorrichtung zu fliegen, sodass ein Längenwert in den Koordinateninformationen variiert und ein Winkelwert nicht variiert; oder
eine zweite Antriebsuntereinheit (1004B), konfiguriert, um, wenn sich die Flugrichtungssteuerungsanweisung auf Linksdrehung oder Rechtsdrehung bezieht, das Luftfahrzeug anzutreiben, um entlang einer Richtung senkrecht zu einer Verbindungslinie zwischen dem Luftfahrzeug und der Steuerungsvorrichtung zu fliegen, sodass ein Winkelwert in den Koordinateninformationen variiert und ein Längenwert nicht variiert,
weiter **dadurch gekennzeichnet, dass** die Beziehungsbestimmungseinheit (1001) umfasst
eine Erfassungsuntereinheit (1001 A), konfiguriert, um ein durch eine Signaltransceivervorrichtung an der Steuerungseinheit übertragenes Erfassungssignal jeweils mittels einer Vielzahl von an unterschiedlichen Positionen an dem Luftfahrzeug installierten Signalerfassungsvorrichtungen zu erfassen; eine Vergleichsuntereinheit (1001B), konfiguriert, um durch die Signalerfassungsvorrichtungen jeweils erfassten Signalstärken zu vergleichen, wobei Projektionen einer Signalerfassungsvorrichtung, die einer höchsten Signalstärke entspricht, einer Signalerfassungsvorrichtung, die einer niedrigsten Signalstärke entspricht und der Kontrollvorrichtung auf eine vertikale Richtung sich auf einer gleichen geraden Linie befinden, und die der höchsten Signalstärke entsprechende Signalerfassungsvorrichtung und die Steuerungsvorrichtung auf der geraden Linie benachbarte Knoten sind; und eine erste Beziehungsbestimmungsuntereinheit (1001C), konfiguriert, um die relative Positionsbeziehung gemäß Installationspositionen der Signalerfassungsvorrichtungen an dem Luftfahrzeug zu bestimmen; oder
wobei die Beziehungsbestimmungseinheit (1001) umfasst: eine erste Sendeuntereinheit (1001D), konfiguriert, um gleichzeitig Detektionssignale an eine Signaltransceivervorrichtung an der Steuerungsvorrichtung mittels einer Vielzahl von an unterschiedlichen Positionen an dem Luftfahrzeug installierten Signalübertragungungsvorrichtungen zu senden; eine Vorrichtungsbestimmungsuntereinheit (1001E), konfiguriert, um ein zuerst von der Signaltransceivervorrichtung empfangenes Detektionssignal und ein zuletzt von der Signaltransceivervorrichtung empfangenes Detektionssignals gemäß einer von der Signaltransceivervorrichtung zurückgeschickten empfangenen Antwortmitteilung zu bestimmen, Projektionen von den Detektionssignalen entsprechenden Signalübertragungsvorrichtungen und der Steuerungsvorrichtung auf eine vertikale Richtung sich auf einer gleichen geraden Linie befinden, und wobei eine dem ersten empfangenen Detektionssignal entsprechende Signalübertragungsvorrichtung und die Steuerungsvorrichtung benachbarte Knoten auf der geraden Linie sind; und eine zweite Beziehungsbestimmungsuntereinheit (1001F), konfiguriert, um die relative Positionsbeziehung gemäß Installationspositionen der Signalübertragungsvorrichtungen an dem Luftfahrzeug zu bestimmen.

7. Einrichtung nach Anspruch 6, wobei die Antriebseinheit (1004) umfasst:
eine Extraktionsuntereinheit (1004C), konfiguriert, um, wenn sich die Flugrichtungssteuerungsanweisung auf schrägen Flug bezieht, eine gerade Komponente und einer rotatorische Komponente zu extrahieren, die in der Flugrichtungssteuerungsanweisung enthalten sind, wobei die gerade Komponente Vorwärtsflug oder Rückwärtsflug des Luftfahrzeugs entspricht und die rotatorische Komponente Linksdrehung oder Rechtsdrehung des Flugs entspricht; und
eine dritte Antriebsuntereinheit (1004D), konfiguriert, um das Luftfahrzeug gemäß der geraden Komponente und der rotatorischen Komponente zu steuern, sodass ein Längenwert in den Koordinateninformationen in Übereinstimmung mit der geraden Komponente variiert und ein Winkelwert in Übereinstimmung mit der rotatorischen Komponente variiert.

8. Einrichtung nach Anspruch 6 oder 7, wobei die Beziehungsbestimmungseinheit (1001) weiter umfasst:
eine Leseuntereinheit (1001G), konfiguriert, um erste Positionierungsinformationen über das Luftfahrzeug mittels einer an dem Luftfahrzeug installierten ersten Positionierungsvorrichtung zu lesen;
eine Empfangsuntereinheit (1001H), konfiguriert, um durch eine Signaltransceivervorrichtung an der Steuerungsvorrichtung gesendete zweite Positionierungsinformationen zu empfangen, wobei die zweiten Positionierungsinformationen durch eine zweite Positionierungsvorrichtung an der Steuerungsvorrichtung erzeugt werden; und
eine dritte Beziehungsbestimmungsuntereinheit (1001I), konfiguriert, um die relative Positionsbeziehung gemäß den ersten Positionierungsinformationen und den zweiten Positionierungsinformationen zu bestimmen.

9. Einrichtung nach Anspruch 6, weiter umfassend:
eine Leseeinheit (1006), konfiguriert, um einen in der Flugrichtungssteuerungsanweisung enthaltenen Typidentifizierer zu lesen; und
eine Bestimmungseinheit (1005), konfiguriert, um den Typ der Flugrichtungssteuerungsanweisung gemäß dem Typidentifizierer zu bestimmen, wobei, wenn der Typidentifizierer einen ersten Wert aufweist, es angezeigt wird, dass die Flugrichtungssteuerungsanweisung auf der Grundlage des Polarkoordinatensystems erzeugt wird; und wenn der Typidentifizierer einen zweiten Wert aufweist, es angezeigt wird, dass die Flugrichtungssteuerungsanweisung auf der Grundlage eines Flugkoordinatensystems des Luftfahrzeugs erzeugt wird, die Antriebseinheit (1001) dann die Flugrichtungssteuerungsanweisung direkt ausführt, um das Luftfahrzeug zu steuern.

10. Einrichtung nach Anspruch 6, wobei die Antriebseinheit (1004) umfasst:
eine Transformationsuntereinheit (1004E), konfiguriert, um eine der Flugrichtungssteuerungsanweisung entsprechende Zielrichtung von dem Polarkoordinatensystem zu einem Flugkoordinatensystem des Luftfahrzeugs zu transformieren; und
eine vierte Antriebsuntereinheit (1004F), konfiguriert, um das Luftfahrzeug zu steuern, um in Übereinstimmung mit der transformierten Zielrichtung zu fliegen.

11. Computerprogramm, beinhaltend Anweisungen zum Ausführen der Schritte eines Flugsteuerungsverfahrens nach einem der Ansprüche 1 bis 5, wenn das Programm durch einen Computer ausgeführt wird.

## Revendications

1. Procédé de commande de vol, comprenant les étapes consistant à :
déterminer (202) une relation de position relative entre un aéronef et un dispositif de commande, le dispositif de commande étant un dispositif unique configuré pour commander l'aéronef ;
déterminer (204) un système de coordonnées polaires à l'aide du dispositif de commande comme origine selon la relation de position relative ;
recevoir (206) une instruction de commande de direction de vol envoyée par le dispositif de commande, l'instruction de commande de direction de vol étant générée sur la base du système de coordonnées polaires ; et
commander (208), selon des informations de coordonnées concernant l'aéronef dans le système de coordonnées polaires, l'aéronef pour voler selon l'instruction de commande de direction de vol ;
le procédé étant **caractérisé en ce que** la commande de l'aéronef pour voler selon l'instruction de commande de direction de vol comprend les étapes consistant à :
lorsque l'instruction de commande de direction de vol fait référence à un vol vers l'avant ou à un vol vers l'arrière, commander l'aéronef pour voler le long d'une direction d'une ligne de liaison entre l'aéronef et le dispositif de commande de sorte qu'une valeur de longueur dans les informations de coordonnées varie et qu'une valeur d'angle ne varie pas ; ou
lorsque l'instruction de commande de direction de vol fait référence à un virage à gauche ou à droite, commander l'aéronef pour voler le long d'une direction perpendiculaire à une ligne de liaison entre l'aéronef et le dispositif de commande de sorte qu'une valeur d'angle dans les informations de coordonnées varie et qu'une valeur de longueur ne varie pas,
le procédé étant en outre **caractérisé en ce que** la détermination de la relation de position relative entre l'aéronef et le dispositif de commande comprend les étapes consistant à :
détecter un signal de détection transmis par un dispositif émetteur-récepteur de signal au niveau du dispositif de commande respectivement via une pluralité de dispositifs de détection de signal installés à différentes positions sur l'aéronef; comparer des intensités de signal détectées respectivement par les dispositifs de détection de signal, dans lequel des projections d'un dispositif de détection de signal correspondant à une intensité de signal la plus élevée, d'un dispositif de détection de signal correspondant à une intensité de signal la plus faible et du dispositif de commande, dans une direction verticale, sont situées sur un même ligne droite, et le dispositif de détection de signal correspondant à l'intensité de signal la plus élevée et le dispositif de commande sont des noeuds adjacents sur la ligne droite ; et déterminer la relation de position relative selon des positions d'installation des dispositifs de détection de signal sur l'aéronef ; ou
envoyer des signaux de détection à un dispositif émetteur-récepteur de signal au niveau du dispositif de commande simultanément via une pluralité de dispositifs de transmission de signal installés à différentes positions sur l'aéronef ; déterminer un signal de détection reçu en premier par le dispositif émetteur-récepteur de signal et un signal de détection reçu en dernier par le dispositif émetteur-récepteur de signal selon un message de réponse reçu renvoyé par le dispositif émetteur-récepteur de signal, des projections, de dispositifs de transmission de signal correspondant aux signaux de détection et au dispositif de commande , à une direction verticale étant située sur une même ligne droite, et un dispositif de transmission de signal correspondant au premier signal de détection reçu et le dispositif de commande étant des noeuds adjacents sur la ligne droite ; et déterminer la relation de position relative en fonction de positions d'installation des dispositifs de transmission de signal sur l'aéronef.

2. Procédé selon la revendication 1, dans lequel la commande de l'aéronef pour qu'il vole selon l'instruction de commande de direction de vol comprend les étapes consistant à :
lorsque l'instruction de commande de direction de vol fait référence à un vol oblique, extraire une composante droite et une composante rotationnelle contenues dans l'instruction de commande de direction de vol, la composante droite correspondant à un vol vers l'avant ou un vol vers l'arrière de l'aéronef, et la composante rotationnelle correspondant à un virage à gauche ou à un virage à droite du vol ; et
commander l'aéronef selon la composante droite et la composante rotationnelle de sorte qu'une valeur de longueur dans les informations de coordonnées varie selon la composante droite et qu'une valeur d'angle varie selon la composante rotationnelle.

3. Procédé selon l'une quelconque des revendications 1 ou 2, dans lequel la détermination de la relation de position relative entre l'aéronef et le dispositif de commande comprend les étapes consistant à :
lire des premières informations de positionnement concernant l'aéronef via un premier dispositif de positionnement installé sur l'aéronef ;
recevoir des secondes informations de positionnement envoyées par un dispositif émetteur-récepteur de signal au niveau du dispositif de commande, les secondes informations de positionnement étant générées par un second dispositif de positionnement au niveau du dispositif de commande ; et
déterminer la relation de position relative selon les premières informations de positionnement et les secondes informations de positionnement.

4. Procédé selon l'une quelconque des revendications précédentes, comprenant en outre les étapes consistant à :
lire un identifiant de type contenu dans l'instruction de commande de direction de vol ; et
déterminer le type de l'instruction de commande de direction de vol selon l'identifiant de type, dans lequel lorsque l'identifiant de type présente une première valeur, il est indiqué que l'instruction de commande de direction de vol est générée sur la base du système de coordonnées polaires ; et lorsque l'identifiant de type présente une seconde valeur, il est indiqué que l'instruction de commande de direction de vol est générée à partir d'un système de coordonnées de vol de l'aéronef, puis l'instruction de commande de direction de vol est directement exécutée de manière à commander l'aéronef.

5. Procédé selon l'une quelconque des revendications précédentes, dans lequel la commande de l'aéronef pour voler selon l'instruction de commande de direction de vol comprend les étapes consistant à :
transformer une direction cible correspondant à l'instruction de commande de direction de vol du système de coordonnées polaires en un système de coordonnées de vol de l'aéronef ; et
commander l'aéronef pour voler selon la direction cible transformée.

6. Appareil de commande de vol, comprenant :
une unité de détermination de relation (1001) configurée pour déterminer une relation de position relative entre un aéronef et un dispositif de commande, le dispositif de commande étant un dispositif unique configuré pour commander l'aéronef ;
une unité de détermination de système de coordonnées (1002) configurée pour déterminer un système de coordonnées polaires avec le dispositif de commande comme origine selon la relation de position relative ;
une unité de réception (1003) configurée pour recevoir une instruction de commande de direction de vol envoyée par le dispositif de commande, l'instruction de commande de direction de vol étant générée sur la base du système de coordonnées polaires ; et
une unité de pilotage (1004) configurée pour commander, selon des informations de coordonnées concernant l'aéronef dans le système de coordonnées polaires, l'aéronef pour voler selon l'instruction de commande de direction de vol ;
l'appareil étant **caractérisé en ce que** l'unité de pilotage (1004) comprend :
une première sous-unité de pilotage (1004A) configurée pour, lorsque l'instruction de commande de direction de vol fait référence à un vol vers l'avant ou à un vol vers l'arrière, commander l'aéronef pour voler le long d'une direction d'une ligne de liaison entre l'aéronef et le dispositif de commande de sorte qu'une valeur de longueur dans les informations de coordonnées varie et une valeur d'angle ne varie pas ; ou
une deuxième sous-unité de pilotage (1004B) configurée pour, lorsque l'instruction de commande de direction de vol fait référence à un virage à gauche ou à un virage à droite, piloter l'aéronef pour voler le long d'une direction perpendiculaire à une ligne de liaison entre l'aéronef et le dispositif de commande de sorte qu'une valeur d'angle dans les informations de coordonnées varie et une valeur de longueur ne varie pas,
**caractérisé en outre en ce que** l'unité de détermination de relation (1001) comprend
une sous-unité de détection (1001 A) configurée pour détecter un signal de détection transmis par un dispositif émetteur-récepteur de signal au niveau du dispositif de commande respectivement via une pluralité de dispositifs de détection de signal installés à différentes positions sur l'aéronef; une sous-unité de comparaison (1001B) configurée pour comparer des intensités de signal détectées respectivement par les dispositifs de détection de signal, dans lequel des projections d'un dispositif de détection de signal correspondant à une intensité de signal la plus élevée, d'un dispositif de détection de signal correspondant à une intensité de signal la plus faible et du dispositif de commande, à une direction verticale sont situées sur une même ligne droite, et le dispositif de détection de signal correspondant à l'intensité de signal la plus élevée et le dispositif de commande sont des noeuds adjacents sur la ligne droite ; et une première sous-unité de détermination de relation (1001C) configurée pour déterminer la relation de position relative en fonction des positions d'installation des dispositifs de détection de signal sur l'aéronef ; ou
dans lequel l'unité de détermination de relation (1001) comprend : une sous-unité d'envoi (1001D) configurée pour envoyer des signaux de détection à un dispositif émetteur-récepteur de signal au niveau du dispositif de commande simultanément via une pluralité de dispositifs de transmission de signal installés à différentes positions sur l'aéronef; une sous-unité de détermination de dispositif (1001E) configurée pour déterminer un signal de détection reçu en premier par le dispositif émetteur-récepteur de signal et un signal de détection reçu en dernier par le dispositif émetteur-récepteur de signal selon un message de réponse reçu renvoyé par le dispositif émetteur-récepteur de signal, des projections, de dispositifs de transmission de signal correspondant aux signaux de détection et du dispositif de commande, à une direction verticale étant située sur une même ligne droite, et un dispositif de transmission de signal correspondant au premier signal de détection reçu et le dispositif de commande étant des noeuds adjacents sur la ligne droite ; et une deuxième sous-unité de détermination de relation (1001F) configurée pour déterminer la relation de position relative en fonction des positions d'installation des dispositifs de transmission de signal sur l'aéronef.

7. Appareil selon la revendication 6, dans lequel l'unité de pilotage (1004) comprend :
une sous-unité d'extraction (1004C) configurée pour, lorsque l'instruction de commande de direction de vol fait référence à un vol oblique, extraire une composante droite et une composante rotationnelle contenues dans l'instruction de commande de direction de vol, la composante droite correspondant à un vol vers l'avant ou un vol vers l'arrière de l'aéronef, et la composante de rotation correspondant à un virage à gauche ou un virage à droite du vol ; et
une troisième sous-unité de pilotage (1004D) configurée pour commander l'aéronef selon la composante droite et la composante rotationnelle de sorte qu'une valeur de longueur dans les informations de coordonnées varie selon la composante droite et qu'une valeur d'angle varie selon la composante rotationnelle.

8. Appareil selon la revendication 6 ou 7, dans lequel l'unité de détermination de relation (1001) comprend en outre :
une sous-unité de lecture (1001G) configurée pour lire des premières informations de positionnement concernant l'aéronef via un premier dispositif de positionnement installé sur l'aéronef;
une sous-unité de réception (1001H) configurée pour recevoir des secondes informations de positionnement envoyées par un dispositif émetteur-récepteur de signal au niveau du dispositif de commande, les secondes informations de positionnement étant générées par un second dispositif de positionnement au niveau du dispositif de commande ; et
une troisième sous-unité de détermination de relation (1001I) configurée pour déterminer la relation de position relative selon les premières informations de positionnement et les secondes informations de positionnement.

9. Appareil selon la revendication 6, comprenant en outre :
une unité de lecture (1006) configurée pour lire un identifiant de type contenu dans l'instruction de commande de direction de vol ; et
une unité de détermination (1005) configurée pour déterminer le type de l'instruction de commande de direction de vol selon l'identifiant de type, dans lequel lorsque l'identifiant de type présente une première valeur, il est indiqué que l'instruction de commande de direction de vol est générée sur la base du système de coordonnées polaires ; et lorsque l'identifiant de type présente une seconde valeur, il est indiqué que l'instruction de commande de direction de vol est générée sur la base d'un système de coordonnées de vol de l'aéronef, puis l'unité de pilotage (1001) exécute directement l'instruction de commande de direction de vol de manière à commander l'aéronef.

10. Appareil selon la revendication 6, dans lequel l'unité de pilotage (1004) comprend :
une sous-unité de transformation (1004E) configurée pour transformer une direction cible correspondant à l'instruction de commande de direction de vol du système de coordonnées polaires en un système de coordonnées de vol de l'aéronef ; et
une quatrième sous-unité de pilotage (1004F) configurée pour commander l'aéronef pour voler selon la direction cible transformée.

11. Programme informatique comprenant des instructions pour exécuter les étapes d'un procédé de commande de vol selon l'une quelconque des revendications 1 à 5 lorsque ledit programme est exécuté par un ordinateur.
